# EUROPEAN PATENT APPLICATION

(11) **EP 4 852 202 A1**
(43) Date of publication of application: **09.12.2026**
(21) Application number: 25181077.6
(22) Date of filing: 05.06.2025
(51) Int. Cl.: H01M 50/507, H01M 50/249, H01M 10/42, B60L 58/10, B60L 50/64

(54) **BATTERY ASSEMBLY FOR A VEHICLE, BATTERY SYSTEM FOR A VEHICLE, VEHICLE, BUSBAR ASSEMBLY FOR A BATTERY ASSEMBLY**

(71) Applicant: Volvo Car Corporation, 405 31 Göteborg (SE)
(72) Inventor: BJÖRKHOLTZ, Jonas, 40531 Göteborg (SE); FORSSELL, Jonas, 40531 Göteborg (SE)
(74) Representative: Kransell & Wennborg KB

(57) **Abstract**

The disclosure relates to a battery assembly (22) for a vehicle (10). The battery assembly (22) comprises a first set (74) of at least four battery cell units (26). Each battery cell unit (26) comprises a cell-level inverter unit (30) and at least one battery cell (32), wherein the cell-level inverter unit (32) and the at least one battery cell (32) are electrically coupled. All the cell-level inverter units (30) are electrically connected in series using a set of busbar elements (62). Each busbar element (62) is electrically connecting neighboring cell-level inverter units (30) within the electrical series connection. At least some of the busbar elements (62) are arranged pairwise opposite one another. Each cell-level inverter unit (30) of a first group of battery cell units comprises a first DC interface (110). The battery assembly (22) further comprises a first pair of elongated conductor bars (66) stacked upon one another. The first DC interfaces (110) are electrically connected to the first pair of elongated conductor bars (66). The disclosure further relates to a battery system (12), a vehicle (10) and a busbar assembly (28).

## Description

### TECHNICAL FIELD

The present disclosure relates to a battery assembly for a vehicle.

Furthermore, the present disclosure relates to a battery system for a vehicle.

In addition, the present disclosure relates to a vehicle.

Moreover, the present disclosure relates to a busbar assembly for a battery assembly.

### BACKGROUND ART

Battery assemblies for battery electric vehicles or hybrid electric vehicles are known in the prior art. They are typically used in a drivetrain of the vehicle to supply electric power to an electric traction machine for the propulsion of said vehicle. Furthermore, the electric power supplied by the battery system can also be used for other applications such as for powering an infotainment system, onboard lights or an air conditioning system of the vehicle. In sum, there are several electric loads in the vehicle which require electric power to fulfill their function.

A battery assembly usually comprises a plurality of battery cells which are electrically coupled with each other in series to provide electric power to different loads in the vehicle. In order to conduct the electric power from the battery cells to the different loads, the battery assembly typically comprises one or more busbars which serve as a central connection point. In particular, the busbars allow for efficient distribution of electrical current from the battery cells, for example, by connecting the battery cells in series.

Recently, there is a trend to add further electronic functionalities to the battery assembly with the consequence that the battery assembly is made more complex, for example, by adding electronic components at the cell level, wherein the electronic components are configured to control the battery cells in a more efficient manner.

### SUMMARY

Thus, it is an objective of the present disclosure to provide an improved busbar architecture which allowing for the electrical connection of more electronic components in the battery assembly.

The problem is at least partially solved or alleviated by the subject matter of the independent claims of the present disclosure, wherein further examples are incorporated in the dependent claims.

According to a first aspect, there is provided a battery assembly for a vehicle. The battery assembly comprises a first set of at least four battery cell units. Each battery cell unit comprises a cell-level inverter unit and at least one battery cell. The cell-level inverter unit and the at least one battery cell are electrically coupled. The cell-level inverter units are electrically connected in series using a set of busbar elements. Each busbar element electrically connects neighboring cell-level inverter units within the electrical series connection. At least some of the busbar elements are arranged pairwise opposite one another. Moreover, each cell-level inverter unit of a first group of battery cell units comprises a first DC interface. The battery assembly further comprises a first pair of elongated conductor bars stacked upon one another. The first DC interfaces are electrically connected to the first pair of elongated conductor bars.

Thus, the set of busbar elements establishes an electric series connection between the at least four battery cell units. In particular, each busbar element may connect two electric connectors serving as AC terminals of two neighboring cell-level inverters with each other to create an electric series connection for AC power. The elongated conductor bars are configured to conduct DC power. Therefore, the elongated conductor bars and the set of busbar elements fulfill different purposes in the battery assembly. Thus, the battery assembly is configured to distribute electric power in a more flexible manner. The electric power may be used for different functionalities of the vehicle.

Furthermore, by using a set of busbar elements, the battery cell units, in particular, the cell-level inverter units, can be electrically connected in a flexible manner. In more detail, the use of busbar elements allows to connect the cell-level inverter units of different battery cell units with each other in a flexible manner. The fact that, the busbar elements are arranged pairwise opposite to each other reduces the occurrence of electromagnetic interferences, i.e. undesired electromagnetic fields within the battery assembly. So to say, the arrangement of the set of busbar elements enables a more advantageous arrangement of the cell-level inverter units to reduce electromagnetic interferences.

The use of the pair of elongated conductor bars stacked upon one another provides an additional functionality on the one side, namely DC connectivity, and more structural stability of the battery assembly on the other side. In particular, the stacking arrangement of the pair of elongated conductor bars upon one another provides improved structural integrity of the battery assembly as a whole. The pair of elongated conductor bars stacked upon one another may serve as a central anchor point around which the battery cell units are arranged. Furthermore, the stacking arrangement of the pair of elongated conductor bars provides a mechanically stable and robust arrangement of the conductor bars. Furthermore, elongated conductor bars are mechanically simple components which can be produced in a cost-efficient and material-efficient manner.

The cell-level inverter unit may be configured to control an operation of a battery cell unit. For example, the cell-level inverter unit may be configured to convert a DC output of the one or more battery cells into AC e.g. by using a printed circuit board. Furthermore, the cell-level inverter unit may also be configured to provide an isolated DC output from the one or more battery cells which can be used for auxiliary loads such as onboard lights, infotainment and suchlike. Optionally, the printed circuit board comprises one or more DC-DC converters such that a DC output may be provided at a voltage different from the DC input provided by the one or more battery cells.

In this context, the printed circuit board may be electrically connected to a plurality of connectors. For example, the cell level inverter unit may comprise three pairs of connectors.

In particular, each battery cell level inverter unit may comprise a pair of electric connectors serving as a DC-terminal for collecting DC power from the at least one battery cell of the battery cell unit, a pair of electric connectors serving as AC terminals for providing AC current for propulsion and two additional connectors serving as DC terminals for providing DC output for auxiliary loads present on the vehicle. The DC terminals may also be denoted herein as first DC interfaces.

Preferably, each of the electric connectors serving as AC terminals is electrically connected to one busbar element of the set of busbar elements. More preferably, the DC terminals are electrically connected to the first pair of elongated conductor bars.

According to an example, the battery cell units are arranged along two parallel rows such that the cell-level inverter units of battery cell units of one row face the cell-level inverter units of the other row.

Using two parallel rows of battery cell units provides the advantage that the battery cell units are arranged pairwise opposite each other such that electromagnetic interferences are significantly reduced when AC current flows through the electric series connection comprising the set of busbar elements and the cell-level inverter units. Moreover, this arrangement enables a space-efficient design of the battery assembly which can therefore be manufactured in a cost-efficient and material-efficient manner.

According to an example, each cell-level inverter unit of a second group of battery cell units comprises a second DC interface. The battery assembly further comprises a second pair of elongated conductor bars stacked upon one another. The second DC interfaces are electrically connected to the second pair of elongated conductor bars.

It is noted that the fact that the DC interfaces are denoted first DC interfaces and second DC interfaces serves the ease of explanation only, i.e. no specific number of DC interfaces is implied. The same applies to the first pair of elongated conductor bars and the second pair of elongated conductor bars.

In other words, the battery assembly may be divided in at least two groups of battery cell units, each group of battery cell units is coupled to a different pair of elongated conductor bars, namely the first pair and the second pair of elongated conductor bars. By doing so, each of the two groups of battery cell units forms their own electric DC circuit with the associated one of the pairs of elongated conductor bars. Each of the two groups of battery cell units may provide a different DC voltage level. Hence, the battery assembly can provide different DC voltage levels which renders the battery assembly more versatile. In particular, the battery assembly may supply different DC output to different loads connected thereto in an electrically simple and efficient manner. Moreover, by using conductor bars stacked upon each other, the busbar assembly also provides structural support for the battery assembly.

According to an example, the first pair of elongated conductor bars and the second pair of elongated conductor bars are stacked upon one another.

Stacking the first pair of elongated conductor bars and the second pair of elongated conductor bars upon one another provides a space-efficient arrangement of the conductor bars. In particular, the above-described arrangement provides a robust stack which improves the structural integrity of the battery assembly.

According to an example, the first pair of elongated conductor bars and/or the second pair of elongated conductor bars are arranged between pairwise opposite busbar elements.

Arranging the first pair of elongated conductor bars and/or the second pair of elongated conductor bars between the pairwise opposite busbar elements provides the advantage that the busbar elements and the conductor bars can be arranged adjacent to each other in a space-efficient manner. Thus, both busbar components can be arranged in a comparatively small space without interfering with each other.

According to an example, the first pair of elongated conductor bars and/or the second pair of elongated conductor bars is arranged between pairwise opposite battery cell units.

This arrangement provides a compact battery cell assembly as the first pair of elongated conductor bars and/or the second pair of elongated conductor bars are arranged between pairwise opposite battery cell units in a space efficient manner.

According to an example, the first pair of elongated conductor bars and/or the second pair of elongated conductor bars serves as a carrier for the set of busbars, wherein the set of busbars are electrically insulated with respect to the first pair of elongated conductor bars and/or the second pair of elongated conductor bars.

Using the first pair of elongated conductor bars and/or the second pair of elongated conductor bars as carrier for the set of busbars provides the advantage that the structural integrity of the battery assembly is further improved. In particular, the busbar elements can be easily attached to the elongated conductor bars without using additional components such as anchors and/or carrier components rendering the busbar assembly cost and material efficient. Furthermore, by insulating the elongated conductor bars from the set of busbar elements, which form the electric AC circuit, can be arranged in close proximity of the elongated conductor bars, which form the electric DC circuit. Altogether, this configuration is space-efficient. In particular, two different circuits can be established in a small space without creating a short circuit. Moreover, using the stacked conductor bars enables a more efficient fabrication of the battery assembly because the stacked conductor bars may serve as guiding elements to which all the single busbar elements be mounted in a simple manner.

For example, the set of battery cell assemblies may be glued to the elongated conductor bars.

For example, the set of busbars are electrically insulated with respect to the first pair of elongated conductor bars and/or the second pair of elongated conductor bars via an insulating coating.

In particular, each busbar out of the set of busbars, the first pair of elongated conductor bars and/or the second pair of elongated conductor bars may comprise a conductor element which is embedded and/or encapsulated with an insulating coating.

The insulating coating may be made of an insulating material which is selected from the group consisting of epoxy resin, polyvinyl chloride, polyethylene, polypropylene, silicone rubber and combinations thereof.

The conductor element may be a material which is selected from the group consisting of copper, aluminum and alloys thereof.

According to an example, the battery assembly further comprises a second set of at least four battery cell units. Each battery cell unit comprises a cell-level inverter unit and at least one battery cell. The cell-level inverter unit and the at least one battery cell are electrically coupled. All the cell-level inverter units are electrically connected in series using a set of busbar elements. Each busbar element electrically connects neighboring cell-level inverter units within the electrical series connection. At least some of the busbar elements are arranged pairwise opposite one another.

The above configuration of the battery assembly allows to divide the battery assembly in at least two sets of battery cell units by employing a first set of busbar elements assigned to the first set and a second set of busbar elements assigned to the second set of battery cell units. Each set of battery cell units has their own electric AC circuit. In other words, the above configuration allows to provide two electric AC circuits which can be used to supply AC current independently from one another. For example, the first set of battery cell units may be used to supply an electric traction machine for the propulsion of the front wheels, wherein the second set of battery cell units may be used to supply an electric traction machine for the propulsion of the rear wheels or vice versa. Thus, a four-wheel drive can be realized in an efficient manner.

According to an example, the battery cell units of the first set and the battery cell units of the second set are arranged along two parallel rows such that the cell-level inverter units of battery cell units of one row face the cell-level inverter units of the other row.

In other words, the second set of busbar elements can be seen as an extension of the first set of busbar elements which are arranged along an arrangement direction of the battery cell units. Still in other words, there are only two rows of busbar elements, each row comprising a section of busbar elements of the first set of busbar elements and an adjacent section of busbar elements of the second set of busbar elements. The first and second set of busbar elements can therefore be arranged in a space-efficient manner next to each other.

According to an example, one of the first set of at least four battery cell units and the second set of at least four battery cell units is electrically connectable to a battery management unit. The respective other one of the first set of at least four battery cell units and the second set of at least four battery cell units is electrically connected to a pair of electric bypass elements connectable to a battery management unit. The pair of electric bypass elements extends parallel to an arrangement direction of the two parallel rows of the first set of at least four battery cell units and the second set of at least four battery cell units.

Using electric bypass elements allows for a space-efficient manner to connect one of the first set of at least four battery cell units and the second set of at least four battery cell units to a battery management unit. The respective other one can be directly coupled to the battery management unit without using bypass elements. Thus, the one of the of the first set of at least four battery cell units and the second set of at least four battery cell units can be electrically connected to the battery management unit without using complex components and/or a complex busbar architecture.

The bypass element may be an elongated conductor bar which extends along the arrangement direction of the two parallel rows of the first set of at least four battery cell units and the second set of at least four battery cell units. In other words, the bypass elements connect the one of the of the first set of at least four battery cell units and the second set of at least four battery cell units which is arranged further away from the battery management unit compared to the respective other one of the first set of at least four battery cell units and the second set of at least four battery cell units to the battery management unit. Still in other words, the bypass elements circumvent, i.e., bypass, the respective one of the of the first set of at least four battery cell units and the second set of at least four battery cell units in order to electrically connect the one of the of the first set of at least four battery cell units and the second set of at least four battery cell units to the battery management unit. This allows a compact design of the battery assembly.

Preferably, the bypass elements may be attached to the first pair and/or second pair of elongated conductor bars.

For example, the bypass elements may have a length which is half or less of the length of the first pair and/or second pair of elongated conductor bars along the arrangement direction of the two parallel rows of the first set of at least four battery cell units and the second set of at least four battery cell units.

For example, the bypass elements may be electrically insulated with respect to the first pair and/or second pair of elongated conductor bars. For example, the bypass elements may comprise the same coating as discussed above for the first pair and/or second pair of elongated conductor bars.

According to a second aspect, there is provided a battery system for a vehicle. The battery system comprises a plurality of battery assemblies according to any one of the preceding examples of the first aspect. Each battery assembly is electrically connected to a shared power supply unit and associated with a phase of a multi-phase electric machine.

In other words, each battery cell assembly forms a battery string which is configured to provide one AC phase of a multi-phase AC current, e.g. a three-phase AC current, in order to supply a three-phase electric machine, i.e., the electric machine. The shared power supply unit may be denoted herein as battery management unit. In principle, the same advantages apply as listed above for the battery assembly of the first aspect.

According to a third aspect, there is provided a vehicle comprising the battery system according to the second aspect and a multi-phase electric machine which is electrically coupled to the battery system.

The battery assembly provides multi-phase AC current suitable for powering the multi-phase electric machine. Preferably, the multi-phase electric machine is a three-phase electric machine. More preferably, the battery system comprises three battery cell assemblies, each battery cell assembly forms a battery string which is configured to provide one AC phase of the three-phase AC current in order to supply a three-phase electric machine, i.e., the electric machine. In principle, the same advantages apply as listed above for the battery assembly of the first aspect.

According to a fourth aspect, there is provided a busbar assembly for a battery assembly according to the first aspect. The busbar assembly comprises a set of busbar elements. Each busbar element is configured for electrically connecting neighboring cell-level inverter units within an electrical series connection. At least some of the busbar elements are arranged pairwise opposite one another. The busbar assembly further comprises a first pair of elongated conductor bars stacked upon one another. The first pair of elongated conductor bars is connectable to first DC interfaces of cell-level inverter units, and/or wherein the busbar assembly further comprises a second pair of elongated conductor bars stacked upon one another. The second pair of elongated conductor bars is connectable to second DC interfaces of cell-level inverter units.

In particular, the first pair of elongated conductor bars is connectable to first DC interfaces of cell-level inverter units of a first group of battery cell units, whereas the second pair of elongated conductor bars is connectable to second DC interfaces of cell-level inverter units of a second group of battery cell units. Thus, the busbar assembly may be configured to provide at least four electric circuits. Two electric AC circuits by connecting neighboring cell-level inverter units with each other using the first and second sets of busbar elements. A first electric DC circuit by connecting the first group of battery cell units to the first pair of elongated conductor bars and one second electric DC circuit by connecting the second group of battery cell units to the second pair of elongated conductor bars. The busbar assembly is therefore versatile and provides different electric circuits in a small space without sacrificing structural integrity as the first and second pair of conductor bars may provide structural support to the battery cell assembly.

According to an example, the first pair of elongated conductor bars and/or the second pair of elongated conductor bars is arranged between pairwise opposite busbar elements.

Arranging the first pair of elongated conductor bars and/or the second pair of elongated conductor bars between the pairwise opposite busbar elements provides the advantage that the busbar elements and the conductor bars can be arranged adjacent to each other in a space-efficient manner. Thus, both busbar components can be arranged in small space without interfering with each other.

According to an example, the first pair of elongated conductor bars and/or the second pair of elongated conductor bars serves as a carrier for the set of busbars. The set of busbars are electrically insulated with respect to the first pair of elongated conductor bars and/or with respect to the second pair of elongated conductor bars.

Using the first pair of elongated conductor bars and/or the second pair of elongated conductor bars as carrier for the set of busbars provides the advantage that the structural integrity of the battery assembly is further improved. In particular, the busbar element can be easily attached to the busbar without using additional components such as anchor and/or carrier components to support the set of busbar elements. Furthermore, by insulating the elongated conductor bars, the set of busbar elements which provide the electric AC current circuit and be supported by the elongated conductor bars which provide the electric DC current circuit in a space efficient manner. In particular, two different circuits can be established in small space without creating a short circuit. Moreover, using the stacked conductor bars enables a more efficient fabrication of the battery assembly because the stacked conductor bars may serve as guiding element to which all the single busbar elements be mounted in a simple manner.

For example, the set of battery cell assemblies may be glued to the elongated conductor bars.

For example, the set of busbars are electrically insulated with respect to the first pair of elongated conductor bars and/or the second pair of elongated conductor bars via an insulating coating.

In particular, each of the set of busbars, the first pair of elongated conductor bars and/or the second pair of elongated conductor bars may comprise a conductor element which is embedded and/or encapsulated with an insulating coating.

The insulating coating may be made of an insulating material which is selected from the group consisting of epoxy resin, polyvinyl chloride, polyethylene, polypropylene, silicone rubber and combinations thereof.

The conductor element may be a material which is selected from the group consisting of copper and aluminum and alloys thereof.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic view of a vehicle according to the present disclosure, the vehicle comprising a battery system according to the present disclosure;
- Figure 2: shows a more detailed view of the battery system of the vehicle from Fig. 1 according to the present disclosure, the battery system comprising at least one battery assembly and one busbar assembly according to the present disclosure;
- Figure 3: shows a partly exploded view of the battery system from Fig. 2;
- Figure 4: shows detail A of the battery cell unit of the battery assembly from Fig 3;
- Figure 5: shows detail B of the front portion of the busbar assembly from Fig. 3;
- Figure 6: shows detail C of the rear portion of the busbar assembly from Fig. 3;
- Figure 7: shows a cross-sectional view along the cross-sectional plane A-A of the battery assembly from Fig. 2; and
- Figure 8: shows detail D of a connection between two battery cell units and the busbar assembly from Figure 7.

### DETAILED DESCRIPTION

The Figures are merely schematic representations and serve only to illustrate examples of the disclosure. Identical or equivalent elements are in principle provided with the same reference signs.

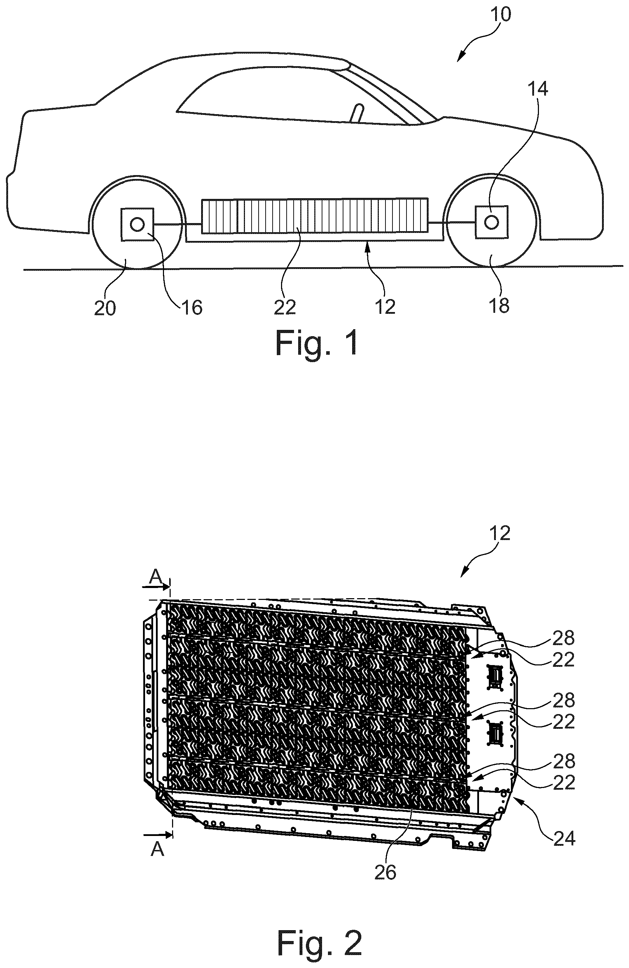

Figure 1 shows a vehicle 10. The vehicle 10 comprises a battery system 12 which is configured to provide electric power for the propulsion of said vehicle 10.

To this end, the battery system 12 is electrically coupled to at least one electric machine. In the present example shown in Fig. 1, the vehicle 10 comprises a front electric machine 14 and a rear electric machine 16.

The front electric machine 14 is configured to provide torque for a pair of front wheels 18, whereas the rear electric machine 16 is configured to provide torque for a pair of rear wheels 20. In other words, each electric machine 14, 16 is configured to provide torque to different axles, namely a front and a rear axle. Consequently, all four wheels 18, 20 of the vehicle 10 may be powered simultaneously such that the vehicle 10 is equipped with a four-wheel drive.

In order to provide sufficient torque to all four wheels 16, 18 of the vehicle 10, each machine 14, 16 is a multi-phase electric machine, in particular a three-phase electric machine which requires three-phase electric AC power to operate.

Preferably, said three-phase electric AC power is supplied to each machine 14, 16 by the battery system 12. Consequently, the battery system 12 is configured to provide three-phase electric AC power.

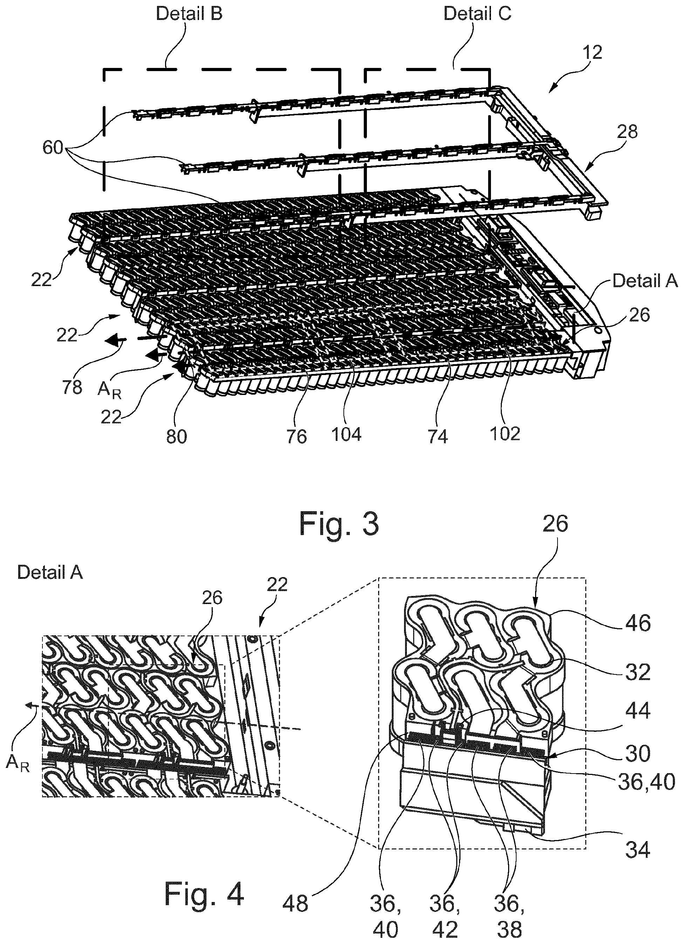

The battery system 12 is described in the following in more detail with reference to Figs. 2 and 3.

In more detail, the battery system 12 comprises at least one battery assembly 22. The battery assembly 22 may also be denoted as battery string.

In Figs. 2 and 3, there are in total three battery assemblies 22, each battery assembly 22 is configured to provide at least one respective phase of the three-phase electric alternating current which is required for powering the electric machine 14, 16.

Each battery assembly 22 has a rear side which is electrically connected to a battery management unit 24. The battery management unit 24 may also be denoted as a shared power supply unit.

The battery management unit 24 is configured to control electric output from each of the battery assemblies 22. For example, the battery management unit 24 may be communicatively coupled to each of the battery assemblies 22 and may control the respective phase of the three-phase electric current which is provided by the battery assemblies 22. Further, the battery management unit 22 transmits the electric output from each of the battery assemblies 22 to at least one of the electric machines 14, 16, preferably to both electric machines 14, 16.

The three battery assemblies 22 are arranged adjacent to each other and extend in parallel to each other along a direction away from the battery management unit 24. In particular, each battery assembly 22 has a string-shaped geometry, in particular a shape resembling an elongated rectangle.

Each battery assembly 22 further comprises a plurality of battery cell units 26 and a busbar assembly 28 which electrically connects the plurality of battery cell units 26 with each other.

As can be seen in Fig. 3, the busbar assembly 28 is a multi-component assembly of busbars which are mechanically attached to each other. The composition of the busbar assembly 28 is described further down below. In the following, the battery cell units 26 are described in more detail with reference to Figs. 3 and 4.

As can be seen in Fig. 3, each battery assembly 28 comprises a plurality of battery cell units 26 which are arranged along an arrangement direction A_{R} adjacent to each other. In more detail, each battery assembly 22 comprises two blocks of battery cell units 26 which are arranged along the arrangement direction A_{R}. Between the two blocks, the busbar assembly 28 is arranged which is electrically connected to both blocks of battery cell units 26.

In Fig. 3, an exemplary battery cell unit 26 is highlighted and shown in more detail in Fig. 4.

Each battery cell unit 26 comprises a cell-level inverter unit 30 and a plurality of battery cells 32 which are electrically coupled to the cell-level inverter unit 32. The plurality of battery cells 32 may also be denoted as battery cluster in the following. The battery cells 32 of the battery cluster are electrically coupled in series. As can be seen from Fig. 4, each battery cell unit 26 comprises in total twelve battery cells 32 which are arranged in an array forming the battery cluster. In the present example, the battery cells 32 are so-called cylindrical cells.

The battery cells 32 of the battery cluster are electrically coupled to the cell-level inverter unit 30. In particular, the battery cells 32 of the battery cluster are electrically coupled to a printed circuit board (PCB) 34 of the cell-level inverter unit 30.

The cell-level inverter unit 30 may be configured to control an operation of the battery cluster such that DC output from the battery cluster is converted into AC current to supply at least one of the machines 14, 16 with electric power. Furthermore, the cell-level inverter unit 30 may also be configured to provide isolated DC output from the battery cluster which can be used for auxiliary loads such as onboard lights, infotainment and suchlike.

In particular, the cell-level inverter unit 30 may comprise a pair of electric connectors 36 serving as DC-terminals 38 for collecting DC current from the battery cluster, a pair of electric connectors 36 serving as AC terminals 40 for providing AC current for propulsion and two additional connectors 36 serving as DC terminals 42 which are isolated DC outputs for auxiliary loads present on the vehicle 10.

In order to control the operation of a battery cluster, the cell-level inverter unit 30 may comprise a controller (not shown) located on the PCB 34. The controller may be communicatively connected to the battery management unit 24, e.g. via a control terminal 44. The battery management unit 24 is further configured to control the operation of a plurality of cell-level inverter units 30 of the battery assembly 30.

As can be seen further in Fig. 4, the battery cell unit 26 comprises a frame 46 in which the battery cluster is received and a slot-shaped recess 48 in which the cell-level inverter unit 30 is accommodated. The slot-shaped recess 48 extends parallel to the arrangement direction A_{R} of the battery cell units 26.

In more detail, each pair of electric connectors 36 protrudes from the slot-shaped recess 48 such that the cell-level inverter unit 30 may be coupled with the busbar assembly 28 via the DC terminals 42 and the AC terminals 40. In other words, each cell-level inverter unit 30 is electrically connected to the busbar assembly 22 via two interfaces, namely one DC interface 42 and one AC interface 40. Further, each cell-level inverter unit 30 is additionally electrically connected to the battery cluster, i.e. the associated battery cells, via the DC terminal 38 for collecting DC current from a battery cluster.

Each pair of electric connectors 36 comprises a first end (not shown) for electrically connecting the connector 36 to the cell-level inverter unit 30, in particular to the PCB 34.

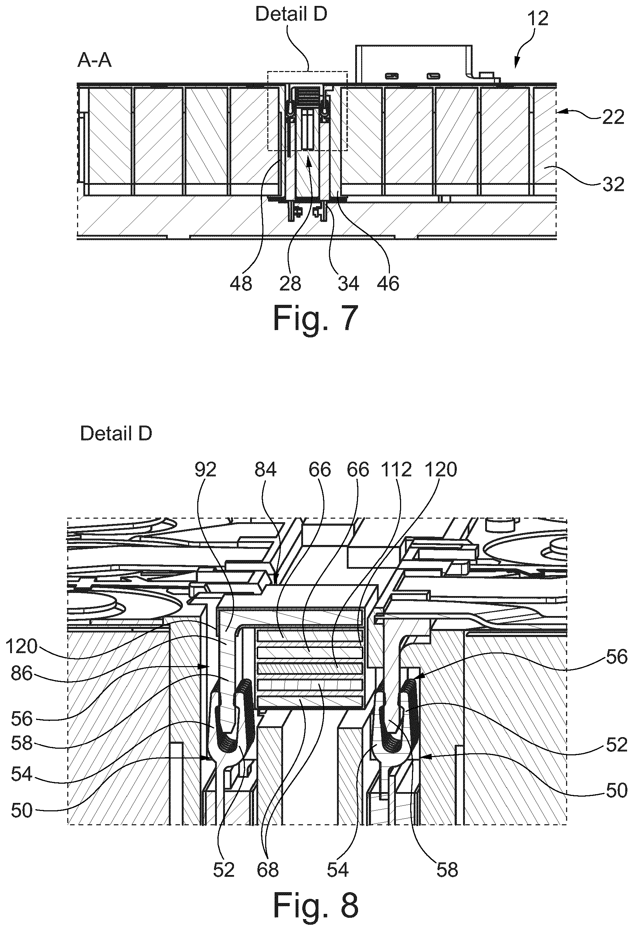

Additionally, the connector 36 comprises a second end, wherein the second end comprises a clamping unit 50 with a first clamping arm 52 and a second clamping arm 54 for establishing the plug-in-connection 56 with an electric counterpart 58 of the busbar assembly 28 by receiving the electric counterpart 58 between the first clamping arm 52 and the second clamping arm 54. The plug-in-connection 56 is best shown in Figure 7 and 8.

In detail, the electric connector 36 is formed as a single piece. This means that the first end and the second end are formed integrally formed as a single piece. In other words, the first end and the second are not produced as separate pieces and subsequently attached to each other, for example, by welding or gluing. Preferably, the electric connector 36 is extruded as a single piece.

It should be noted that the electric connector 36 may be designated as a female connector part, whereas the electric counterpart 58 is designated as a male connector part.

Furthermore, the first end and the second 38 are arranged opposite to each other. This means that the clamping unit 50 and the plate-shaped portion (not shown) are pointing in opposite directions.

In the following, the busbar assembly 28 is described in more detail with reference to Figs. 3, 5 and 6.

Turning to Fig. 3, it can be seen that the busbar assembly 28 comprises three substantially I-shaped strings 60, each string 60 being assigned and/or electrically coupled to one of the three battery assemblies 22.

In detail, each string 60 is embedded in one of the three battery assemblies 22 such that the two rows of battery cell units 26 of the respective battery assembly 22 are arranged on both sides of the string 60 of the busbar assembly 22. In other words, each string 60 of the busbar assembly 28 extends parallel to the arrangement direction Aᵣ of the battery cell units 26 of the respective battery assembly 22.

Each string 60 comprises a first set of busbar elements 62, a second set of busbar elements 64, a first pair of elongated busbar conductors 66 and a second pair of elongated busbar conductors 68.

In the following, the first set of busbar elements 62 and the second set of busbar elements 64 are described in more detail.

The first set of busbar elements 62 is configured to create a first electric AC circuit 70, whereas the second set of busbar elements 64 is configured to create a second electric AC circuit 72. In other words, each string 60 comprises two electric AC circuits 70, 72 which are independent from each other. Both AC circuits 70, 72 are electrically coupled to the battery management unit 24.

In more detail, the first set of busbar elements 62 is configured for electrically connecting the battery cell units 26 of a first set 74 of at least four battery cell units 26 with each other. In particular, each busbar element 62 of the first set of busbar elements 62 is configured to electrically connect neighboring cell-level inverter units 30 within an electrical series connection.

At least some of the busbar elements 62 of the first set of busbar elements 62 are arranged pairwise opposite one another.

The second set of busbar elements 64 is configured for electrically connecting the battery cell units 26 of a second set 76 of at least four battery cell units 26 with each other. In particular, each busbar element 64 of the second set of busbar elements 64 is configured to electrically connect neighboring cell-level inverter units 30 within an electrical series connection.

At least some of the busbar elements 64 of the second set of busbar elements 64 are arranged pairwise opposite one another.

The first and second sets 74, 76 are best shown in Fig. 3. It should further be noted that each of the first and second sets 74, 76 of at least four battery cell units 26 may comprise more than four battery cell units 26. For example, each of the first and second sets 74, 76 of at least four battery cell units 26 may comprise 4 to 22 battery cell units 26. Preferably, the number of battery cell units 26 of the first and second sets 74, 76 may vary. For example, the number of battery cell units 26 of the first set 74 may be larger than the number of battery cell units 26 of the second set 76 or vice versa. In particular, the first and second AC electric circuits 70, 72 which are created by the first and second sets 74, 76 of battery cell units 26 may be assigned to the front electric machine 14 and to the rear electric machine 16, respectively, wherein each machine 14, 16 requires different levels of electric power to operate. Thus, the number of battery cell units 26 in the respective one of the first and second sets 74, 76 can be selected in dependence of the power requirement and/or voltage requirement of the machines 14, 16 connected thereto. In the present example shown in Fig. 3, the first set 74 comprises more battery cell units 26 than the second set 76. This is because the first set 74 is assigned to the rear machine 16, whereas the second set 76 is assigned to the front machine 14 which requires less electric power compared to the rear machine 16. It is noted again that this is the case in the present example. Other examples may be different.

The battery cell units 26 of the first and second sets 74, 76 are arranged along two parallel rows 78, 80 such that the cell-level inverter units 30 of battery cell units 26 of one row 78 face the cell-level inverter units 30 of the other row 80. This is best shown in Fig. 3.

In other words, both rows 78, 80 are arranged in parallel to each other. The middle plane which is arranged between both rows 78, 80 is aligned parallel to the arrangement direction of battery cell units 26.

In order to form the first and second AC electric circuits 70, 72, the first and second set of busbar elements 62, 64 comprise a plurality of linear connectors 82 and at least one cross connector 84.

The linear connectors 82 are configured to electrically connect neighboring cell-level inverter units 30 with each other along a direction which is parallel to the arrangement direction A_{R} of the battery cell units 26.

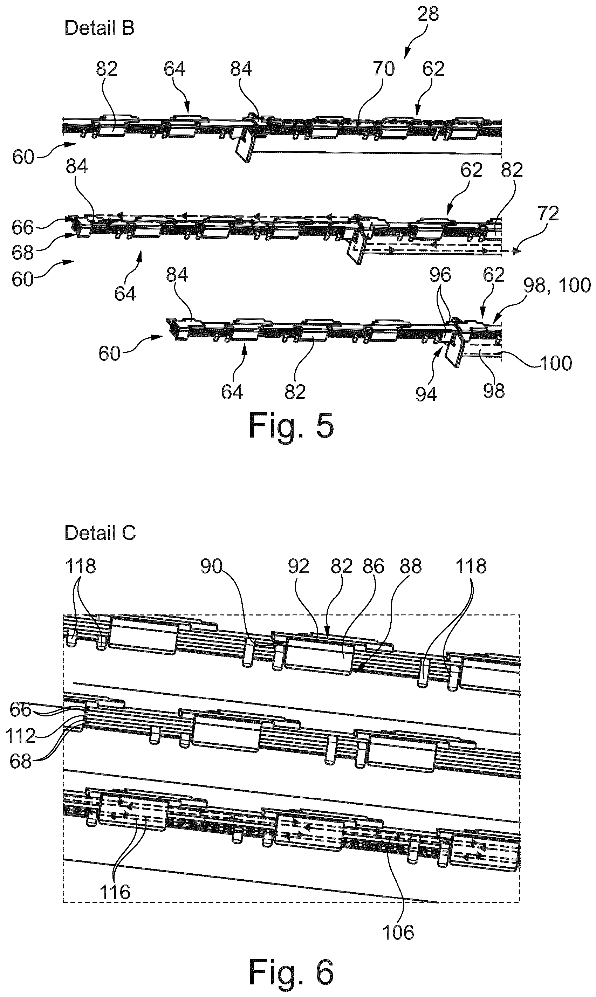

Each linear connector 82 comprises a plate-shaped body 86 which is made of an electrically conducting material, for example, copper and/or aluminum. This is best shown in Fig. 6.

The plate-shaped body 86 may be designated as the counterpart 58 for the pair of electric connectors 36 of the cell-level inverter units 30 as described above.

Furthermore, the plate-shaped body 86 has a first end 88 and a second end 90 which are arranged opposite to each other. The first end 88 may be tapered. In a mounted position, the plate-shaped body 86, in particular, the first end 88 may be received by the clamping unit 50 to form the plug-in-connection 56.

The second end 90 has an L-shaped mounting portion 92 which is mechanically attached to the first pair of elongated busbar conductors 66, for example, via a glueing connection.

Each set of first and second busbar elements 62, 64 comprises one cross-connector 84. In principle, the cross-connector 84 has two plate-shaped bodies 86 which are arranged parallel to each other. In detail, both plate-shaped bodies 86 are aligned parallel to a middle plane between the two rows 78, 80 of battery cell units 26.

Both plate-shaped bodies 86 are electrically connected via the two L-shaped mounting portion 92 which are electrically connected with each other. Preferably, the cross-connector 84 is made of one piece, in particular the two plate-shaped bodies 86 and the two L-shaped mounting portion 92 are together formed as one piece. Thus, the cross connector 84 has a U-shaped cross-section.

The cross connector 84 is configured to electrically connect the first and second rows 78, 80 of battery cell units 26 with each other. Therefore, the cross connector 84 of each electric AC circuit 70, 72 is placed at the front end of the busbar assembly 28 pointing away from the battery management unit 24. In other words, each cross connector 84 closes the respective one of the electric AC circuits 70, 72.

Turning to Fig. 5, one of the first set 74 of battery cell units and the second set 76 of is electrically connectable to a battery management unit 24, wherein the respective other one of the first set 74 and the second set 76 is electrically connected to a pair of electric bypass elements 94 connectable to a battery management unit 24. The pair of electric bypass elements 94 extends in parallel to the arrangement direction A_{R} of the two parallel rows 78, 80 of the first set and the second set 76.

In other words, each bypass element 94 is configured to electrically connect one of the respective rows 78, 80 of the first and second sets 74, 76 to the battery management unit 24. The bypass elements 94 are best shown in Fig. 5.

Each bypass element 94 comprises a bypass connector 96 being electrically coupled to a fin-shaped conductor bar 98 which is made of an electrically conducting material. The bypass connector 96 is equivalent to one of the linear connectors 82, wherein the bypass connector 96 being configured to electrically couple one cell-level inverter unit 30 of one of the respective rows 78, 80 of the first and second sets 74, 76 with the fin-shaped conductor bar 98.

Thus, there are in total two fin-shaped conductor bars 98, each fin-shaped conductor bar 98 being assigned to one of the bypass connectors 96. The two fin-shaped conductor bars 98 are plate-shaped and are attached to each other along their longitudinal sides. It should be noted that the second fin-shaped busbar 98 is arranged behind the first fin-shaped busbar 98 and is therefore not visible in Figures 5 and 6 due to the perspective shown.

In more detail, the bypass connectors 96 are L-shaped and extend along a direction pointing away from the middle plane of the two rows 78, 80. In other words, each of the bypass connectors 96 may have a protrusion with which the current can be transported from the one cell-level inverter unit 30 of one of the respective rows 78, 80 of the first and second sets 74, 76 to the fin-shaped conductor bars 98.

Each of the fin-shaped conductor bars 98 extends in parallel to the arrangement direction A_{R} of the two parallel rows 78, 80 of the first set 74 and the second set 76. In other words, each fin-shaped conductor bar 98 connects the respective one of the two parallel rows 78, 80 of the first set 74 and the second set 76 with the battery management unit 24 by bypassing the respective other one of the two parallel rows 78, 80 of the first set 74 and the second set 76.

Preferably, each fin-shaped conductor bar 98 extends in and/or is aligned in parallel to the middle plane which is arranged between the two rows 78, 80 of battery cell units 26.

Even more preferably, each fin-shaped conductor bar 98 arranged by a 90° turn compared to the first and second pairs of elongated busbar conductors 66, 68.

Each fin-shaped conductor bar 98 may be mechanically attached to the first and/or second pair of elongated busbar conductors 66, 68, for example, by using a gluing connection.

In particular, each fin-shaped conductor bar 98 comprises an AC conductor element 100 which is configured to electrically couple the respective bypass connector 96 to the battery management unit 24. Thus, there are in total two AC conductor elements 100, one for each fin-shaped conductor bar 98. In particular, the length of the two AC conductor elements 100 corresponds to the length of the first electric AC circuit 70 measured from the cross connector 84 of the first set of busbar elements 62 to the battery management unit 24.

In other words, each battery assembly 22 is divided in two sets 74, 76 of battery cell units, wherein each set 74, 76 is assigned to different AC circuits 70, 72 such that the battery assembly 22 is configured to provide two AC outputs, which can be used independently from each other to power one associated phase of the first and the second electric machines 14, 16. In particular, the two sets of battery cell units 74, 76 provide the same respective phase of the three-phase electric AC current. Because there are in total three battery assemblies 22, this results in sum in two three-phase electric AC currents which are provided by a single battery system 12. Thus, one battery system 12 is capable of powering two electric three-phase AC machines 14, 16.

In the following, the first pair of elongated busbar conductors 66 and the second pair of elongated busbar conductors 68 are described in more detail with reference to Figs. 5 and 6.

Both, the first pair of elongated busbar conductors 66 and the second pair of elongated busbar conductors 68 are stacked upon each other. In more detail, each of the four busbar conductors is plate-shaped. Preferably, each of the four busbar conductors has a substantially rectangular shape.

More preferably, each of the elongated busbar conductor of the first pair of elongated busbar conductors 66 and the second pair of elongated busbar conductors 68 has the same geometry and/or shape.

Moreover, each of the elongated busbar conductor of the first pair of elongated busbar conductors 66 and the second pair of elongated busbar conductors 68 has a thickness which is sufficient to structurally support the battery assembly 22. Furthermore, each of the elongated busbar conductor of the first pair of elongated busbar conductors 66 and the second pair of elongated busbar conductors 68 may have a length which corresponds to a length of the first and second rows 78, 80 of battery cell units 26.

Additionally, the first pair of elongated busbar conductors 66 and the second pair of elongated busbar conductors 68 are stacked upon each other in a congruent manner, for example, such that a circumference of a projection of the first pair of elongated busbar conductors 66 onto the second pair of elongated busbar conductors 68 is congruent to the circumference of the second pair of elongated busbar conductors 68.

The stacking direction of the first pair of elongated busbar conductors 66 and the second pair of elongated busbar conductors 68 may be parallel to the middle plane arranged between the two rows 78, 80 as shown in Fig. 5 and 6. However, it may also be possible to arrange the first pair of elongated busbar conductors 66 and the second pair of elongated busbar conductors 68 along a stacking direction which is arranged orthogonally to the middle plane arranged between the two rows 78, 80 (not shown). Preferably, the stacking direction of the first pair of elongated busbar conductors 66 and the second pair of elongated busbar conductors 68 is parallel to the middle plane arranged between the two rows 78, 80 as shown in Fig. 5 and 6.

Furthermore, each of the first pair of elongated busbar conductors 66 and the second pair of elongated busbar conductors 68 are connected to the plurality of battery cell units 26 of the battery assembly 22.

To be specific, each of the first pair of elongated busbar conductors 66 and the second pair of elongated busbar conductors 68 is electrically connected to the battery cell units 26 in a specific manner. Specifically, the battery cell assembly 22 comprises at least two groups 102, 104 of battery cell units 26, namely a first group of battery cell units 102 and a second group of battery cell units 104. The first pair of elongated busbar conductors 66 is electrically connected to the first group of battery cell units 102 and the second pair of elongated busbar conductors 68 is electrically connected to the second group of battery cell units 104. The at least two groups 102, 104 of battery cell units 26 are best shown in Fig. 3.

It should be noted that that the least two groups 102, 104 of battery cell units 26 should not be mixed up with the first and second sets 74, 76 of battery cell units 26. Where the at least two groups 102, 104 refer to the DC circuits, the first and second sets 74, 76 refer to the AC circuits. Both, the groups 102, 104 and the sets 74, 76 may refer to different or the same battery cell units 26 as each battery cell unit 26 is configured to provide DC output and AC output.

The first group 102 of battery cell units 26 is electrically coupled to the first pair of elongated busbar conductors 66 to create a first DC circuit 106. The first DC circuit 106 may be a low voltage DC circuit for low voltage loads, for example, for auxiliary loads and the safety systems of the vehicle 10. For example, 15 V voltage DC circuits. This is best shown in Fig. 6.

To be specific, each cell-level inverter unit 30 of the first group 102 of battery cell units 30 is electrically connected to the first pair of elongated conductor bars 66 via first DC interfaces 110. The first DC interfaces 110 may be designated as the DC terminals 42 of the cell level inverter units 30 of the first group of battery cell units 102.

Furthermore, there may be an elongated redundancy conductor busbar 112 which is stacked between the first pair of elongated conductor bars 66 and the second pair of elongated conductor bars 68. The redundancy conductor busbar 112 as shown in the embodiment illustrated in Figures 5 and 6 may not be populated, i.e., not connected to any of the battery cell units 26 in the present example. However, the redundancy conductor busbar 112 may serve as a placeholder to establish further DC circuits in order to achieve redundant DC circuits. In such an embodiment, redundancy conductor busbar 112 may be connected to the battery cell units 26, for example, to the first group 102 of battery cell units 26 or a subgroup thereof. Redundant DC circuits are of advantage as they multiply the number of DC circuits in the busbar assembly which increases the stability and safety of the system. It should be noted that the redundancy conductor busbar 112 is only a placeholder as there may be more than one redundancy conductor busbar 112 present to establish redundant DC circuits, for example, two, three or four redundancy conductor busbars 112.

The idea to provide redundant low voltage DC circuits is to improve the system stability. For example, the use of two voltage DC circuits provides fail-save power supply in case that one of the voltage DC circuits may be interrupted, for example, during a crash and/or a system failure.

Each cell-level inverter unit 30 of the second group 104 of battery cell units 30 is electrically connected to the second pair of elongated conductor bars 68 via second DC interfaces 114. The second DC interfaces 114 may be designated as the DC terminals 42 of the cell level inverter units 30 of the second group of battery cell units 104.

The second group of battery cell units 104 create a second circuit 116. The second DC circuit 116 may be a high voltage DC circuit, for example, for high voltage loads such as air conditioning of the vehicle. For example, an 800 V voltage DC circuit.

In order to electrically connect the first pair of elongated busbar conductors 66 with the first DC interfaces 110 and the second pair of elongated busbar conductors 68 with the second DC interfaces 114, each elongated busbar conductor of the first pair of elongated busbar conductors 66 and the second pair of elongated busbar conductors 68 comprises a plurality of electric tabs 118 which are designated as counterparts 58 for forming a plug-in-connection 56 with the pair of connectors 36 of the DC terminals 42.

The electric tabs 118 may be arranged on opposite sides of the elongated busbar conductor of the first pair of elongated busbar conductors 66 and the second pair of elongated busbar conductors 68. Each of the opposite sides faces one of the first and second rows 78, 80 of the battery cell units 26. This arrangement further improves the system stability of the battery system 12 because in case of a crash and/or a deformation of the battery system 12, the electric tabs 118 are evenly distributed over the busbar assembly 28.

In particular, each component of the busbar assembly 22, specially the first pair of elongated conductor bars 66, the second pair of elongated conductor bars 68, the elongated redundancy conductor busbar 112, the linear connectors 82, the cross connector 84 and/or the bypass elements 94 may be embedded and/or encapsulated with an insulating coating 120.

The insulating coating 120 may be made of an insulating material which is selected from the group consisting of epoxy resin, polyvinyl chloride, polyethylene, polypropylene, silicone rubber and combinations thereof.

In other words, the first pair of elongated conductor bars 66, the second pair of elongated conductor bars 68, the elongated redundancy conductor busbar 112, the linear connectors 82, the cross connector 84 and/or the bypass elements 94 are electrically insulated against each other such that a short-circuit is prevented.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: battery system
- 14: front electric machine
- 16: rear electric machine
- 18: front wheels
- 20: rear wheels
- 22: battery assembly
- 24: battery management unit
- 26: battery cell unit
- 28: busbar assembly
- 30: cell level inverter unit
- 32: battery cell
- 34: PCB
- 36: pair of electric connectors
- 38: DC-terminal
- 40: AC terminal
- 42: DC
- 44: control terminal
- 46: frame
- 48: slot shaped recess
- 50: clamping unit
- 52: first clamping arm
- 54: second clamping arm
- 56: plug-in-connection
- 58: counterpart
- 60: string
- 62: first set of busbar elements
- 64: second set of busbar elements
- 66: first pair of elongated busbar conductors
- 68: second pair of elongated busbar conductors
- 70: first AC electric circuit
- 72: second AC electric circuit
- 74: first set of at least four battery cell units
- 76: second set of at least four battery cell units
- 78: first row
- 80: second row
- 82: linear connectors
- 84: cross connectors
- 86: plate-shaped body
- 88: first end
- 90: second end
- 92: L-shaped mounting portion
- 94: bypass elements
- 96: bypass connectors
- 98: fin-shaped conductor bar
- 100: two AC conductor elements
- 102: first group of battery cell units
- 104: second group of battery cell units
- 106: first DC circuit
- 110: first DC interfaces
- 112: elongated ground conductor busbar
- 114: second DC interfaces
- 116: second DC circuit
- 118: electric tabs
- 120: coating

## Claims

1. A battery assembly (22) for a vehicle (10), the battery assembly (22) comprising:
a first set (74) of at least four battery cell units (26), each battery cell unit (26) comprising a cell-level inverter unit (30) and at least one battery cell (32), wherein the cell-level inverter unit (30) and the at least one battery cell (32) are electrically coupled,
wherein all the cell-level inverter units (30) are electrically connected in series using a set of busbar elements (62), each busbar element (62) electrically connecting neighboring cell-level inverter units (30) within the electrical series connection,
wherein at least some of the busbar elements (62) are arranged pairwise opposite one another,
wherein each cell-level inverter unit (30) of a first group of battery cell units comprises a first DC interface (110),
wherein the battery assembly (22) further comprises a first pair of elongated conductor bars (66) stacked upon one another, and
wherein the first DC interfaces (110) are electrically connected to the first pair of elongated conductor bars (66).

2. The battery assembly (22) according to claim 1, wherein the battery cell units (26) are arranged along two parallel rows (78, 80) such that the cell-level inverter units (30) of battery cell units (26) of one row (78, 80) face the cell-level inverter units (30) of the other row (78, 80).

3. The battery assembly (22) according to claim 1 or 2, wherein each cell-level inverter unit (30) of a second group (104) of battery cell units (26) comprises a second DC interface (114), and
wherein the battery assembly (22) further comprises a second pair of elongated conductor bars (68) stacked upon one another,
wherein the second DC interfaces (114) are electrically connected to the second pair of elongated conductor bars (68).

4. The battery assembly (22) according to claim 3, wherein the first pair of elongated conductor bars (66) and the second pair of elongated conductor bars (68) are stacked upon one another.

5. The battery assembly (22) of any one the preceding of claims, wherein the first pair of elongated conductor bars (66) and/or the second pair of elongated conductor bars (68) is arranged between pairwise opposite busbar elements (62).

6. The battery assembly (22) of any one of the preceding claims, wherein the first pair of elongated conductor bars (66) and/or the second pair of elongated conductor bars (68) is arranged between pairwise opposite battery cell units (26).

7. The battery assembly (22) of any one of the preceding claims, wherein the first pair of elongated conductor bars (66) and/or the second pair of elongated conductor bars (68) serves as a carrier for the set of busbars (62),
wherein the set of busbars (62) are electrically insulated with respect to the first pair of elongated conductor bars (66) and/or with respect to the second pair of elongated conductor bars (68).

8. The battery assembly (22) of any one of the preceding claims, further comprising a second set (76) of at least four battery cell units (26), each battery cell unit (26) comprising a cell-level inverter unit (30) and at least one battery cell (32), wherein the cell-level inverter unit (30) and the at least one battery cell (32) are electrically coupled,
wherein all the cell-level inverter units (30) are electrically connected in series using a set of busbar elements (64), each busbar element (64) electrically connecting neighboring cell-level inverter units (30) within the electrical series connection, and
wherein at least some of the busbar elements (64) are arranged pairwise opposite one another.

9. The battery assembly (22) of claim 8, wherein the battery cell units (26) of the first set (74) and the battery cell units (26) of the second set (76) are arranged along two parallel rows (78, 80) such that the cell-level inverter units (30) of battery cell units (26) of one row (78, 80) face the cell-level inverter units (30) of the other row (78, 80).

10. The battery assembly (22) of claim 9, wherein one of the first set of at least four battery cell units (74) and the second set of at least four battery cell units (76) is electrically connectable to a battery management unit (24),
wherein the respective other one of the first set of at least four battery cell units (74) and the second set of at least four battery cell units (76) is electrically connected to a pair of electric bypass elements (94) connectable to a battery management unit (24),
wherein the pair of electric bypass elements (94) extends parallel to an arrangement direction (A_{R}) of the two parallel rows (78, 80) of the first set of at least four battery cell units (74) and the second set of at least four battery cell units (76).

11. A battery system (12) for a vehicle (10), wherein the battery system (12) comprises a plurality of battery assemblies (22) according to any one of the preceding claims, wherein each battery assembly (22) is electrically connected to a shared power supply unit (24) and associated with a phase of a multi-phase electric machine (14, 16).

12. A vehicle (10) comprising the battery system (12) according to claim 11 and the multi-phase electric machine (14, 16) which is electrically coupled to the battery system (12).

13. A busbar assembly (28) for a battery assembly (22) of any one of claims 1 to 10, the busbar assembly (28) comprising a set of busbar elements (62, 64), each busbar element (62, 64) configured for electrically connecting neighboring cell-level inverter units (30) within an electrical series connection,
wherein at least some of the busbar elements (62, 64) are arranged pairwise opposite one another, wherein the busbar assembly (28) further comprises a first pair of elongated conductor bars (66) stacked upon one another,
wherein the first pair of elongated conductor bars (68) is connectable to first DC interfaces (110) of cell-level inverter units (30), and/or
wherein the busbar assembly (28) further comprises a second pair of elongated conductor bars (68) stacked upon one another, wherein the second pair of elongated conductor bars (68) is connectable to second DC interfaces (114) of cell-level inverter units (30).

14. The busbar assembly (28) of claim 13, wherein the first pair of elongated conductor bars (66) and/or the second pair of elongated conductor bars (68) is arranged between pairwise opposite busbar elements (62, 64).

15. The busbar assembly (28) of claims 13 or 14, wherein the first pair of elongated conductor bars (66) and/or the second pair of elongated conductor bars (68) serves as a carrier for the set of busbars (62, 64),
wherein the set of busbars (62, 64) are electrically insulated with respect to the first pair of elongated conductor bars (66) and/or with respect to the second pair of elongated conductor bars (68).
